# EUROPÄISCHE PATENTSCHRIFT

(11) **EP 2 850 940 B1**
(45) Veröffentlichungstag und Bekanntmachung des Hinweises auf die Patenterteilung: **10.05.2017**
(21) Anmeldenummer: 14176443.1
(22) Anmeldetag: 10.07.2014
(51) Int. Cl.: A01F 15/14

(54) **Garnklemmvorrichtung für eine Ballenpresse**
Thread clamping device for a baling press
Dispositif de serrage de fil pour une presse à empaqueter

(30) Priorität: 23.09.2013 DE 102013015641
(43) Veröffentlichungstag der Anmeldung: 25.03.2015
(73) Patentinhaber: Usines CLAAS France, 57141 Metz (FR)
(72) Erfinder: Hesselmann, Ulrich, 54439 Saarburg (DE); Scharf, Thorsten, 66693 Mettlach (DE); Moersch, Daniel, 66706 Perl (DE)
(74) Vertreter: Budach, Steffen

(56) Entgegenhaltungen:
- WO-A1-2007/131562
- DE-C- 938 885
- US-A- 515 113

## Beschreibung

Die vorliegende Erfindung betrifft eine Garnklemmvorrichtung zum Einsatz in einer Ballenpresse. Eine solche Garnklemmvorrichtung ist z.B. aus DE 1 923 729 U1 bekannt.

Quaderballenpressen haben herkömmlicherweise einen Presskanal, in dem ein Presskolben hin und her bewegt wird und dabei quer zu seiner Bewegungsrichtung in den Presskanal eingeführtes Erntegut gegen einen bereits vorhandenen Ballen andrückt und dabei verdichtet. Sobald der auf diese Weise entstehende Erntegutballen vorgesehene Größe erreicht hat, wird er verknotet. Hierfür benötigte Bindegarnstränge sind bereits während der Entstehung des Ballens um diesen herumgeschlungen und sind bei jedem Hub des Kolbens dessen Druck ausgesetzt. Eine Garnklemmvorrichtung, muss während der Ballenbildung eine berträchtliche Klemmkraft auf das freie Ende eines solchen Bindegarnstrangs ausüben, damit das Garn von den Hüben des Kolbens nicht aus der Klemmung entweicht. Wenn jedoch bei einer herkömmlichen Garnklemmvorrichtung die Klemmkraft, der das Bindegarn zwischen Klemmrad und Klemmplatte ausgesetzt ist, zu hoch gewählt ist, dann besteht die Gefahr, dass das Garn durch die Klemmung innerlich Schaden nimmt und schließlich unter dem Druck des Kolbens reißt. Wenn zu locker geklemmtes Garn aus der Klemmvorrichtung entweicht oder zu fest geklemmtes Garn reißt, sind die Folgen für den Betrieb der Ballenpresse ähnlich. Der Ballen kann nicht mehr fertig gestellt werden, das Material des unfertigen Ballens muss aus dem Presskanal beseitigt werden, und das Bindegarn muss neu in die Klemmvorrichtung eingeführt und in dieser befestigt werden. Die damit verbundenen Arbeitsunterbrechungen beeinträchtigen erheblich die Wirtschaftlichkeit eines Erntevorgangs.

Aus der US 515113 A ist eine Garnklemmvorrichtung zum Klemmen zweier unterschiedlicher Garnenden mit unterschiedlichen Klemmkräften bekannt. Die Garnklemmeinrichtung weist dabei ein Klemmrad mit einer Anzahl von radial außenseitig an dem Klemmrad ausgebildeten Ausnehmungen zur Aufnahme der Garnenden sowie zwei Platten zum Klemmen der Garnenden auf, wobei die Garnenden jeweils zwischen der ihnen zugeordneten Platte und dem Klemmrad geklemmt werden.

Aufgabe der Erfindung ist daher, eine Garnklemmvorrichtung zu schaffen, bei der sowohl die Gefahr einer zu lockeren als auch einer zu festen Klemmung verringert ist.

Die Aufgabe wird gelöst, indem bei einer Garnklemmvorrichtung für eine Ballenpresse mit einem um eine Welle drehbaren Klemmrad und einer Klemmplatte, die gemeinsam einen Klemmspalt begrenzen, der Klemmspalt mehrere entlang eines die sich durch den Klemmspalt erstreckenden Bindegarnstrangs verteilte und durch Aussparungen voneinander getrennte Engstellen aufweist. An den Engstellen ist das Bindegarn relativ starkem Druck ausgesetzt und dementsprechend stärker im Querschnitt verformt als in den Aussparungen zwischen den Engstellen. Ein Verrutschen des Garns unter einer vom Presskolben ausgeübten Zugkraft erfordert daher nicht nur eine Überwindung der Reibung zwischen dem Garn und dem es klemmenden Oberflächen der Garnklemmvorrichtung, sondern gleichzeitig auch eine Verformung des Garnquerschnitts beim Durchtritt durch eine Engstelle. Um eine gegebene Zugbelastbarkeit der Klemmen zu erreichen, ist daher weniger Reibungswiderstand erforderlich, als wenn das Garn in einem Klemmspalt mit konstanter oder sich zum Knoter hin vergrößernder Spaltbreite geklemmt ist. Dies erlaubt es, die Klemmkraft (und damit die Gefahr einer Beschädigung des Garns durch die Klemmung) zu verringern, ohne dass gleichzeitig die Zugbelastbarkeit der Klemmung abnimmt.Erfindungsgemäß sind die Aussparungen auf die Klemmplatte und das Klemmrad verteilt, wobei die Klemmplatte und das Klemmrad jeweils eine im Wesentlichen ebene Klemmfläche aufweisen, in der eine Gruppe von geradlinigen Aussparungen gebildet ist. Die Klemmstellen sind vorzugsweise durch Vorsprünge und Aussparungen von Klemmplatte und Klemmrad gebildet, wobei jeweils einem Vorsprung der Klemmplatte eine Aussparung des Klemmrades und/oder einer Aussparung der Klemmplatte ein Vorsprung des Klemmrades gegenüber liegt. Auf diese Weise wird das Garn nicht nur an den Engstellen im Querschnitt verformt, sondern es wird auch auf engem Radius gekrümmt, so dass zum Herausziehen des Garnes aus der Klemmung zusätzlich auch noch Walkarbeit zu leisten ist. Auch dies trägt zum Widerstand des Garnes gegen das Herausziehen aus dem Klemmspalt bei. Vorzugsweise haben die Vorsprünge ebene Scheitelflächen. Damit die gegeneinander versetzten Vorsprünge von Klemmrad und Klemmscheibe keine Schneidwirkung auf das Garn ausüben, sollte die Ausdehnung der Scheitelflächen zweckmäßigerweise jeweils wenigstens so groß sein wie der ihnen gegenüberliegenden Aussparungen. Ein Eindringen der Scheitelflächen in die Aussparung, durch das auf das Garn eine Schneidwirkung ausgeübt werden könnte, kann auf diese Weise vermieden werden.

Vorzugsweise sind die Vorsprünge und Aussparungen linienförmig.

Damit das im Klemmspalt geklemmte Garn einer Zugbelastung durch den Presskolben nicht durch eine Bewegung quer zur Kraftrichtung ausweichen kann, sind die linienförmigen Vorsprünge und Aussparungen vorzugsweise senkrecht zu einem der Zugkraft ausgesetzten, in der Klemmvorrichtung gehaltenen Strang des Bindegarns orientiert.

Das Klemmrad kann zwei identische Anordnungen von Vorsprüngen und Aussparungen aufweisen, die alternativ gegenüber den Vorsprüngen und Aussparungen der Klemmplatte positionierbar sind und die sich beim Klemmen des Garns vorzugsweise von einem Ballen zum nächsten abwechseln.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht der Garnklemmvorrichtung;
- Fig. 2: eine Draufsicht auf die Klemmfläche eines Klemmrades der Garnklemmvorrichtung;
- Fig. 3: eine Draufsicht auf die Klemmfläche einer Klemmplatte der Garnklemmvorrichtung; und
- Fig. 4: einen Schnitt durch Klemmplatte und Klemmrad entlang eines zwischen ihnen geklemmten Bindegarnstrangs.

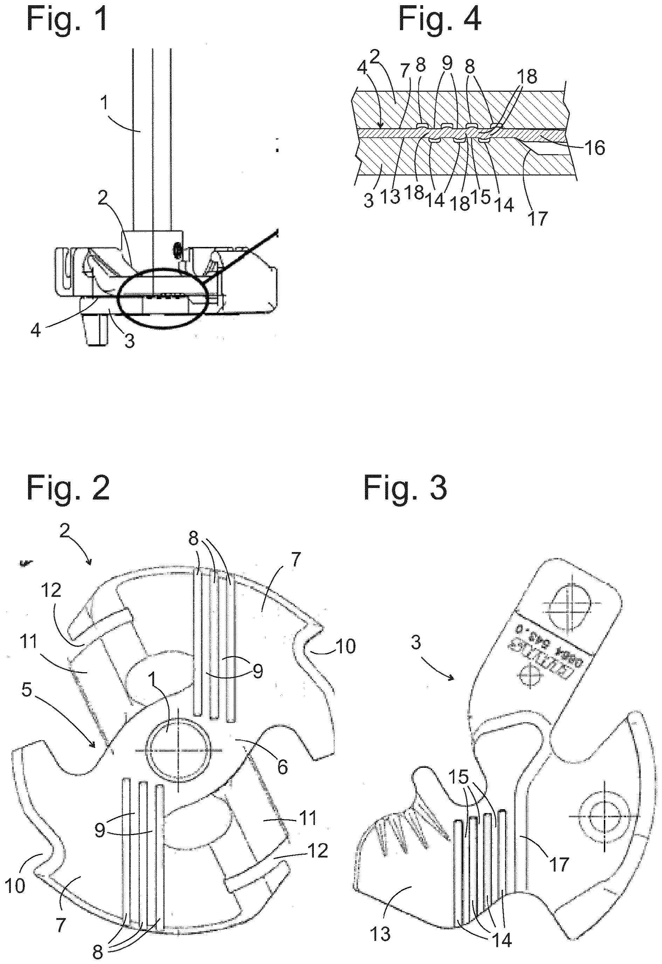

Fig. 1 zeigt eine Seitenansicht einer erfindungsgemäßen Garnklemmvorrichtung ohne einen darin geklemmten Bindegarnstrang. An der Spitze einer periodisch drehangetriebenen Welle 1 ist in an sich bekannter Weise ein Garnklemmrad 2 montiert. Eine Klemmplatte 3 ist von einer in der Fig. nicht dargestellten Feder gegen eine von der Welle 1 abgewandte Klemmfläche des Garnklemmrades 2 beaufschlagt. Da in der dargestellten Konfiguration kein Bindegarn zwischen Garnklemmrad 2 und Klemmplatte 3 eingeklemmt ist, ist ein Klemmspalt 4 zwischen beiden geschlossen, und Garnklemmrad 2 und Klemmplatte 3 berühren einander stellenweise.

Fig. 2 zeigt eine Draufsicht auf die der Klemmplatte 3 zugewandte Seite des Garnklemmrades 2. Eine ebene Klemmfläche 5 des Garnklemmrades 2 ist in der Draufsicht hantelähnlich geformt, mit einem Mittelstück 6, an dem die Welle 1 drehfest verankert ist, und zwei im Vergleich zum Mittelstück 6 verbreiterten Endstücken 7. In jedem dieser Endstücke 7 ist eine Anordnung von mehreren parallelen, wellenförmigen Aussparungen 8 gebildet. Vorsprünge 9 zwischen den Aussparungen 8 liegen in einer Ebene mit der umgebenden Klemmfläche 5. Die Endstücke 7 weisen jeweils, gegen die Aussparungen 8 im Uhrzeigersinn versetzt, eine Randkerbe 10 und, in gegen Uhrzeigersinn versetzt, eine aus der Ebene der Klemmfläche 5 schräg aufsteigende Flanke 11 auf, in der ein Schlitz 12 gebildet ist. Jedes mal, wenn das Sammeln und Verdichten von Material für einen Ballen abgeschlossen ist, führt eine an sich bekannte, hier nicht dargestellte Bindegarnnadel einen Bindegarnstrang an eines der Endstücke 7 heran, so dass es zwischen Randkerbe 10 und Flanke 11 über die Klemmfläche 5 geschlungen wird und dabei die Aussparungen 8 kreuzt. Bei einer anschließenden Drehung des Garnklemmrades 2 um 180° wird der Schlitz 12 über ein ortsfestes Messer hinweg bewegt, so dass das Messer den Bindegarnstrang durchtrennt. Von den dadurch erhaltenen zwei Garnenden hängt eines an dem mittlerweile fertig verknoteten Ballen und verlässt den Knoter; das andere bleibt in der Klemmvorrichtung geklemmt.

Während der darauffolgenden Phase des Verdichtens von Material für den nächsten Ballen befindet sich somit ein freies Ende des Bindegarnstrangs in etwa in Höhe einer der beiden Flanken 11 des Klemmrades 2, und der Bindegarnstrang erstreckt sich über eine der Gruppen von Aussparungen 8 im Wesentlichen rechtwinklig hinweg bis zur Randkerbe 10. Der an der Randkerbe 10 umgelenkte Bindgarnstrang erstreckt sich weiter Richtung des Presskanals, wo er der Zugkraft des das Erntegut verdichtenden Kolbens ausgesetzt ist.

Dem Garnklemmrad 2 liegt die in Fig. 3 in Draufsicht gezeigte Klemmplatte 3 gegenüber. Auch sie hat eine im Wesentlichen ebene Klemmfläche 13, in der eine Gruppe von geradlinigen Aussparung 14 gebildet ist. Die Aussparungen 14 sind um eine zahlreicher als die Aussparungen 8 des Klemmrades 2. Im zusammengefügten Zustand der Fig. 1 wirken diese Aussparungen 14 und sich zwischen ihnen erstreckende, mit der Klemmfläche 13 bündige Vorsprünge 15 mit einer der Gruppen von Aussparungen 8 und Vorsprüngen 9 des Garnklemmrades 2 zusammen, um den Bindegarnstrang an seinem abgeschnittenen Ende zu klemmen.

Fig. 4 zeigt einen Querschnitt durch Garnklemmrad 2 und Klemmplatte 3 entlang des geklemmten, hier mit 16 bezeichneten Bindegarnstrangs. Die Klemmfläche 13 der Klemmplatte 3 nimmt nur den linken Teil der Fig. 4 ein; sie endet an einer schrägen Schulter 17, jenseits von der der Abstand zwischen Garnklemmrad 2 und Klemmplatte 3 zu groß ist, um den Bindegarnstrang 16 zu klemmen und zu verformen. Der Bindegarnstrang 16 ist daher nur links von der Schulter 17 flachgedrückt; rechts von ihr ist er mit seinem natürlichen Durchmesser von ca. 5 mm zu sehen.

Links von der Schulter 17 liegt jeweils ein Vorsprung 9 des Garnklemmrades 2 einer Aussparung 14 der Klemmplatte 3 bzw. ein Vorsprung 15 der Klemmplatte 3 einer Aussparung 8 des Garnklemmrades 2 gegenüber. Die Vorsprünge 9, 15 haben jeweils ebene, den Aussparungen 8, 14 zugewandte Stirnflächen, die hier jeweils geringfügig breiter sind als die gegenüberliegenden Aussparungen 8, 14. So ist sichergestellt, dass der Bindegarnstrang 16 an denjenigen Engstellen 18, an denen sich jeweils Ränder der Vorsprünge 9 und 15 gegenüberliegen, zwar im Querschnitt verformt wird, aber im Wesentlichen keiner Scherbeanspruchung ausgesetzt ist, die zu einer Schädigung und letztlich zu einem Reißen des Strangs 16 unter der vom Presskolben ausgeübten Zugkraft führen könnten. Zwischen zwei Engstellen 18 bietet jeweils eine Aussparung 8 oder 14 dem Bindegarnstrang 16 Platz zum Ausweichen, sodass dort sein Querschnitt weniger stark abgeflacht ist als in den Engstellen 18. Der Bindegarnstrang 16 kann daher nur dann dem Zug des Presskolbens nachgeben und im Klemmspalt 4 verrutschen, wenn an jeder Engstelle 18 nicht nur der Reibungswiderstand sondern auch der Widerstand des Bindegarnstrangs 16 gegen eine Verformung seines Querschnitts überwunden wird. Da die Vorsprünge 9, 15 etwas breiter sind als die gegenüberliegenden Aussparungen 14, 8, können sie nicht in die Aussparungen eingreifen und folglich keine Dehnbeanspruchung auf den Bindegarnstrang 16 ausüben, der sich zur Zugbeanspruchung durch den Kolben hinzu addieren und dadurch das Reißen des Strangs 16 begünstigen würde. So wird ein fester Sitz des Bindegarnstrangs bei relativ geringer Materialbeanspruchung erreicht, so dass sowohl die Gefahr des Reißens als auch die des Entweichens aus dem Klemmspalt 4 reduziert sind.

### Bezugszeichen

- 1: Welle
- 2: Garnklemmrad
- 3: Klemmplatte
- 4: Klemmspalt
- 5: Klemmfläche
- 6: Mittelstück
- 7: Endstücken
- 8: Aussparung
- 9: Vorsprung
- 10: Randkerbe
- 11: Flanke
- 12: Schlitz
- 13: Klemmfläche
- 14: Aussparung
- 15: Vorsprung
- 16: Bindegarnstrang
- 17: Schulter
- 18: Engstelle

## Patentansprüche

1. Garnklemmvorrichtung für eine Ballenpresse, mit einem um eine Welle (1) drehbaren Klemmrad (2) und einer Klemmplatte (3), die gemeinsam einen Klemmspalt (4) begrenzen, wobei der Klemmspalt (4) mehrere entlang einer vorgesehenen Erstreckung eines Bindegarnstrangs (16) verteilte, durch Aussparungen (8, 14) voneinander getrennte Engstellen (18) aufweist, **dadurch gekennzeichnet, dass** die Aussparungen (8, 14) auf die Klemmplatte (3) und das Klemmrad (2) verteilt sind, und dass die Klemmplatte (3) und das Klemmrad (2) jeweils eine im Wesentlichen ebene Klemmfläche (5,13) aufweisen, in der eine Gruppe von geradlinigen Aussparungen (8,14) gebildet ist.

2. Garnklemmvorrichtung nach Anspruch 1, **dadurch gekennzeichnet, dass** einer der Aussparungen (8) des Klemmrades(2) ein Vorsprung (15) der Klemmplatte (3) und/oder einer der Aussparungen (14) der Klemmplatte (3) ein Vorsprung (9) des Klemmrades (2) gegenüberliegt.

3. Garnklemmvorrichtung nach Anspruch 2, **dadurch gekennzeichnet, dass** die Vorsprünge (9, 15) ebene Scheitelflächen haben.

4. Garnklemmvorrichtung nach Anspruch 3, **dadurch gekennzeichnet, dass** die Ausdehnung der Scheitelflächen jeweils wenigstens so groß ist wie die der ihnen gegenüberliegenden Aussparungen (8, 14).

5. Garnklemmvorrichtung nach einem der Ansprüche 2 bis 4, **dadurch gekennzeichnet, dass** die Vorsprünge (9, 15) linienförmig sind.

6. Garnklemmvorrichtung nach Anspruch 5, **dadurch gekennzeichnet, dass** die Vorsprünge (9, 15) und Aussparungen (8, 14) senkrecht zu einem in der Klemmvorrichtung haltbaren Strang des Bindegarns (16) orientiert sind.

7. Garnklemmvorrichtung nach einem der vorhergehenden Ansprüche, **dadurch gekennzeichnet, dass** das Klemmrad (2) zwei identische Anordnungen von Vorsprüngen (9) und Aussparungen (8) aufweist, die alternativ gegenüber den Vorsprüngen (15) und Aussparungen (14) der Klemmplatte (3) positionierbar sind.

## Claims

1. A twine clamping device for a bale press, comprising a clamping wheel (2) rotatable about a shaft (1) and a clamping plate (3), which together define a clamping gap (4), wherein the clamping gap (4) has a plurality of constrictions (18) which are distributed along a provided extent of a binding twine line (16) and which are separated from each other by recesses (8, 14), **characterised in that** the recesses (8, 14) are distributed on the clamping plate (3) and the clamping wheel (2), and the clamping plate (3) and the clamping wheel (2) each have a substantially flat clamping surface (5, 13) in which a group of rectilinear recesses (8, 14) is formed.

2. A twine clamping device according to claim 1 **characterised in that** a projection (15) of the clamping plate (3) is disposed opposite one of the recesses (8) in the clamping wheel (2) and a projection (9) in the clamping wheel (2) is disposed opposite one of the recesses (14) in the clamping plate (3).

3. A twine clamping device according to claim 2 **characterised in that** the projections (9, 15) have flat apex surfaces.

4. A twine clamping device according to claim 3 **characterised in that** the extent of the apex surfaces is respectively at least as great as that of the recesses (8, 14) opposite same.

5. A twine clamping device according to one of claims 2 to 4 **characterised in that** the projections (9, 15) are linear.

6. A twine clamping device according to claim 5 **characterised in that** the projections (9, 15) and recesses (8, 14) are oriented perpendicularly to a line of the binding twine (16), that can be held in the clamping device.

7. A twine clamping device according to one of the preceding claims **characterised in that** the clamping wheel (2) has two identical arrangements of projections (9) and recesses (8), which can be positioned alternatively opposite the projections (15) and recesses (14) of the clamping plate (3).

## Revendications

1. Dispositif reteneur de ficelle pour une presse à balles, comprenant un disque reteneur (2) tournant autour d'un arbre (1) et un plateau reteneur (3) qui, conjointement, délimitent un intervalle de retenue (4), l'intervalle de retenue (4) comportant plusieurs rétrécissements (18) répartis le long d'une extension prévue d'un brin de ficelle de liage (16) et séparés les uns des autres par des évidements (8, 14), **caractérisé en ce que** les évidements (8, 14) sont répartis sur le plateau reteneur (3) et sur le disque reteneur (2), et **en ce que** le plateau reteneur (3) et le disque reteneur (2) comportent chacun une face de retenue sensiblement plane (5, 13) dans laquelle est formé un groupe d'évidements rectilignes (8, 14).

2. Dispositif reteneur de ficelle selon la revendication 1, **caractérisé en ce qu'**en face d'un des évidements (8) du disque reteneur (2) se trouve une saillie (15) du plateau reteneur (3) et/ou en face des évidements (14) du plateau reteneur (3) se trouve une saillie (9) du disque reteneur (2).

3. Dispositif reteneur de ficelle selon la revendication 2, **caractérisé en ce que** les saillies (9, 15) ont des surfaces de sommet planes.

4. Dispositif reteneur de ficelle selon la revendication 3, **caractérisé en ce que** l'extension de chacune des surfaces de sommet est au moins égale à celle des évidements (8, 14) qui leur font face.

5. Dispositif reteneur de ficelle selon une des revendications 2 à 4, **caractérisé en ce que** les saillies (9, 15) sont linéaires.

6. Dispositif reteneur de ficelle selon la revendication 5, **caractérisé en ce que** les saillies (9, 15) et évidements (8, 14) sont orientés perpendiculairement à un brin de ficelle de liage (16) pouvant être maintenu dans le dispositif reteneur.

7. Dispositif reteneur de ficelle selon une des revendications précédentes, **caractérisé en ce que** le disque reteneur (2) comporte deux agencements identiques de saillies (9) et d'évidements (8), lesquels sont positionnables alternativement en face des saillies (15) et des évidements (14) du plateau reteneur (3).
